# EUROPÄISCHE PATENTSCHRIFT

(11) **EP 3 140 345 B1**
(45) Veröffentlichungstag und Bekanntmachung des Hinweises auf die Patenterteilung: **13.09.2017**
(21) Anmeldenummer: 15771541.8
(22) Anmeldetag: 17.09.2015
(51) Int. Cl.: C08K 5/098

(54) **ZUSAMMENSETZUNGEN VON AMINOSILOXANEN, ALKOXYSILICIUMVERBINDUNGEN UND METALLCARBOXYLATEN**
COMPOSITIONS OF AMINOSILOXANES, ALKOXYSILICON COMPOUNDS AND METAL CARBOXYLATES
COMPOSITIONS D'AMINOSILOXANES, DE COMPOSÉS D'ALCOXYSILICIUM ET DE CARBOXYLATES MÉTALLIQUES

(30) Priorität: 15.10.2014 DE 102014220912
(43) Veröffentlichungstag der Anmeldung: 15.03.2017
(73) Patentinhaber: Wacker Chemie AG, 81737 München (DE)
(72) Erfinder: LEHOTKAY, Thomas, 84453 Mühldorf (DE); EICHBERGER, Walter, A-5232 Kirchberg (AT); SEEGER-FEICHTINGER, Inge, 94166 Stubenberg (DE)
(74) Vertreter: Fritz, Helmut
(86) Internationale Anmeldenummer: PCT/EP2015/071343
(87) Internationale Veröffentlichungsnummer: WO 2016/058781

(56) Entgegenhaltungen:
- DE-A1- 3 113 365
- DE-A1-102006 032 456

## Beschreibung

Die Erfindung betrifft Zusammensetzungen von Aminoalkylgruppen aufweisendem Polydimethylsiloxan, Alkoxisiliciumverbindungen und Metallcarboxylaten und deren Verwendung zur Behandlung von Substraten.

Siliconhaltige Hydrophobierungsmittel für textile Anwendungen bestehen vorwiegend aus H-Siloxanhaltigen Formulierungen, welche gute wasserabweisende Eigenschaften zeigen. H-Siloxane sind jedoch in der Anwendung wegen der Freisetzung von explosivem Wasserstoffgas bei mittleren bis höheren pH-Werten problematisch. Ferner kann der entstehende Wasserstoff mitunter Farbstoffe chemisch umwandeln.
Ziel war es, eine H-Siloxanfreie vernetzbare
Hydrophobierungsrezeptur auf Siliconbasis zu entwickeln, welche auch anwendungskompatibel ist.

H-Siloxanfreie vernetzbare Siliconzusammensetzungen sind bekannt:
WO 2012/038293 und WO 2012/038292 beschreiben Zusammensetzung aus vernetzbaren Aminosiliconen und MQ-Harzen.
WO 2013/101751 beschreibt eine zinnfreie kondensationsvernetzende Zusammensetzung mit einem silylgruppenhaltigen Siliconpolymer, mit Silan- oder Silikatvernetzer und einem Zr-Salz. Diese Zusammensetzungen sind Dichtungsmassen und sind schwer in Emulsionen zu überführen und aufgrund der Feuchtigkeitsempfindlichkeit einiger Katalysatortypen nicht in wässriger Form stabilisierbar.
WO 2005/080666 beschreibt eine kondensationsvernetzende Zusammensetzung mit Siliconharz, Silikatvernetzer und einem Zr-Salz zur wasserabweisenden Behandlung von Textilien. Die Griffeigenschaften der damit behandelten Textilien sind unbefriedigend.

In der EP 651089 ist eine Kombination aus aminofunktionalisierten Polysiloxanen, viel Kieselsäure und Metallestern zur Behandlung von Fasern beschrieben. Die Verbesserung von Wasser- oder Ölabweisung ist nicht beschrieben. Wenn große Mengen an Kieselsäure vorhanden sind, bildet sich eine schlecht haftende Schicht an der Substratoberfläche. DE 102006032456 A1 beschreibt ein Verfahren zur Behandlung von Fasern mit Öl-in-Wasser Emulsionen von Aminoalkylgruppen aufweisendem Polysiloxan, MQ-Siliconharz, Protonierungsmittel, Wasser und wenig Emulgator.

DE 3113365 A1 beschreibt die Verwendung von Zinkacetat in wässrigen, Organopolysiloxane enthaltenden Beschichtungsmassen.

Gegenstand der Erfindung sind Zusammensetzungen (Z), die enthalten:
(i) 100 Gew.-Teile eines Aminoalkylgruppen aufweisenden Polydimethylsiloxans (P) mit einer Aminzahl von mindestens 0,05 mequiv/g Polydimethylsiloxan (P), aufgebaut aus Einheiten der allgemeinen Formel I

   R¹ₐR²_{b}SiO_{(4-a-b/2)} (I),

   in der
   - **R¹**: unsubstituierte oder mit Halogenen substituierte Alkylreste mit 1-40 Kohlenstoffatomen, Reste -OR oder -OH,
   - **R**: unsubstituierte oder mit Halogenen substituierte Alkylreste mit 1-40 Kohlenstoffatomen,
   - **R²**: Aminoalkylreste der allgemeinen Formel II

   -R³-NR⁴R⁵ (III),
   - **R³**: zweiwertige Kohlenwasserstoffreste mit 1-40 Kohlenstoffatomen,
   - **R⁴, R^{4'}**: einwertige Kohlenwasserstoffreste mit 1-40 Kohlenstoffatomen oder H,
   - **R⁵**: H oder einen Rest der allgemeinen Formel III

   -(R⁶-NR⁴)ₓR⁴ (III),
   - **R⁶**: einen zweiwertigen Rest der allgemeinen Formel IV

   -(CR^{4'}R^{4'}-)_{y} (IV),
   - **x**: den Wert 0 oder einen Wert von 1 bis 40,
   - **y**: den Wert 1 oder 2,
   - **a**: den Wert 0, 1, 2 oder 3,
   - **b**: den Wert 0, 1, 2 oder 3 und
   - **a+b**: einen durchschnittlichen Wert von 1,5 bis 2,5 bedeuten,
   wobei höchstens 20 mol% der Reste R¹ OH oder OR sind,
(ii) 1 bis 80 Gew.-Teile einer an Silicium gebundene Alkoxygruppen aufweisenden Siliciumverbindung (S) und
(iii) 0,5 bis 15 Gew.-Teile Metall-C₁-C₄-carboxylat, wobei das Metall ausgewählt wird aus Zr(IV), Ti(IV) und Zn(II).

Die Zusammensetzungen (Z) zeigen hervorragende Wasserabweisung auf vielen Substraten, insbesondere Fasern und Textilien. Darüber hinaus zeigen die mit den Zusammensetzungen (Z) behandelten Substrate verbesserte Öl- und Schmutzabweisung. Das leicht wasserlösliche bzw. emulgierbare Metall-C₁-C₄-carboxylat zeigt bereits einen grundierenden Effekt der durch das Polydimethylsiloxan (P) und die Siliciumverbindung (S) verstärkt wird.

Die Alkylreste R¹ und R können linear, zyklisch, verzweigt, gesättigt oder ungesättigt sein. Vorzugsweise weisen die Alkylreste R¹ und R 1-18 Kohlenstoffatome, insbesondere 1 bis 6 Kohlenstoffatome auf, besonders bevorzugt sind Methylrest oder Ethylrest. Bevorzugte Halogensubstituenten sind Fluor und Chlor. Besonders bevorzugte Reste R¹ sind Methylrest, Methoxyrest, Ethoxyrest oder -OH. Vorzugsweise sind höchstens 10 mol% der Reste R¹ OH oder OR.

Die zweiwertigen Kohlenwasserstoffreste R³ können chlorsubstituiert, linear, zyklisch, verzweigt, aromatisch, gesättigt oder ungesättigt sein. Vorzugsweise weisen die Reste R³ 1 bis 6 Kohlenstoffatome auf, besonders bevorzugt sind Alkylenreste, insbesondere Propylen.

Die einwertigen Kohlenwasserstoffreste R⁴ können chlorsubstituiert, linear, zyklisch, verzweigt, aromatisch, gesättigt oder ungesättigt sein. Vorzugsweise weisen die Reste R⁴ 1 bis 6 Kohlenstoffatome auf, besonders bevorzugt sind Alkylreste. Besonders bevorzugte Substituenten R⁴ sind Methyl, Ethyl, Cyclohexyl und H.

Vorzugsweise beträgt b den Wert 0 oder 1. Vorzugsweise beträgt a+b einen durchschnittlichen Wert von 1,9 bis 2,2.

Vorzugsweise weist x den Wert 0 oder einen Wert von 1 bis 18, besonders bevorzugt 1 bis 6 auf.

Besonders bevorzugte Reste R² sind -CH₂N(R⁴)₂, -(CH₂)₃N(R⁴)₂, - (CH₂)₃N(R⁴)(CH₂)₂N(R⁴)₂, insbesondere
Aminoethylaminopropylrest, Aminopropylrest und
Cyclohexylaminopropylrest.

Vorzugsweise ist das Polydimethylsiloxan (P) aufgebaut aus mindestens 3, insbesondere mindestens 10 Einheiten und vorzugsweise höchstens 200 Einheiten der allgemeinen Formel I.

Das Verhältnis von a zu b ist so gewählt, daß das Polydimethylsiloxan (P) mindestens eine Aminzahl von 0,05 mequiv/g Polydimethylsiloxan (P), vorzugsweise mindestens 0,2 mequiv/g Polydimethylsiloxan (P) aufweist. Die Aminzahl des Polydimethylsiloxans (P) beträgt vorzugsweise höchstens 7 mequiv/g Polydimethylsiloxan (P).

Die Viskosität des Polydimethylsiloxans (P) beträgt vorzugsweise 1 bis 100000 mPa·s, besonders bevorzugt 10 bis 50000 mPa·s, insbesondere 10 bis 20000 mPa·s bei 25°C.

Die Aminoalkylgruppen des Polydimethylsiloxans (P) können ganz oder teilweise nach bekannten chemischen Reaktionen umgesetzt worden sein; z.B. kann ein Teil der Aminreste mit anorganischen oder organischen Säuren neutralisiert sein, z.B. Ameisensäure, Essigsäure, Propionsäure, Ölsäure, Stearinsäure, Zitronensäure Schwefelsäure oder Salzsäure. Wenn die Aminoalkylgruppen des Polydimethylsiloxans (P) mit Säuren neutralisiert sind dann wird vorzugsweise Säure in einer Menge von 0,05 bis 1 Mol Proton pro Mol basisches Stickstoffatom der Reste R² zugesetzt.

Hergestellt werden die Polydimethylsiloxane (P) durch bekannte chemische Verfahren wie z.B. Hydrolyse oder Äquilibrierung.

Die an Silicium gebundene Alkoxygruppen aufweisende Siliciumverbindung (S) umfasst vorzugsweise Alkoxysilane, monomere, oligomere und polymere Silicatverbindungen sowie an Silicium gebundene Alkoxygruppen aufweisende Siliconharze.

Vorzugsweise werden die Silicatverbindungen ausgewählt aus dem Tetraalkoxysilicat der allgemeinen Formel V

R⁷O₄Si (V),

und einer Polysilicatverbindung die mindestens 80 Mol-% Einheiten der allgemeinen Formeln VI und VII und mindestens 2 Einheiten der allgemeinen Formel VI

R⁷O₃SiO_{1/2} (VI),

R⁷O₂SiO_{2/2} (VII),

aufweist und deren Gemischen, wobei
- **R⁷**: unsubstituierte oder mit Halogenen substituierte Kohlenwasserstoffreste mit 1-18 Kohlenstoffatomen bedeuten.

Die einwertigen Kohlenwasserstoffreste R⁷ können halogensubstituiert, linear, zyklisch, verzweigt, aromatisch, gesättigt oder ungesättigt sein. Vorzugsweise weisen die Reste R⁷ 1 bis 6 Kohlenstoffatome auf, besonders bevorzugt sind Alkylreste und Phenylreste. Bevorzugte Halogensubstituenten sind Fluor und Chlor. Besonders bevorzugte Reste R⁷ sind Methyl, Ethyl und Propyl. Ebenfalls bevorzugt ist die Kombination der Bedeutungen Phenylrest und Methylrest.

Vorzugsweise enthält die Polysilicatverbindung mindestens 90, insbesondere mindestens 95 Mol-% Einheiten der allgemeinen Formeln VI und VII.

Die restlichen Einheiten der Polysilicatverbindung können beispielsweise Einheiten der allgemeinen Formeln VIII und IX

R⁷OSiO_{3/2} (VIII),

SiO_{4/2} (IX),

sein, wobei R⁷ die vorstehenden Bedeutungen aufweist.

Die an Silicium gebundene Alkoxygruppen aufweisenden Siliconharze sind vorzugsweise aufgebaut aus mindestens 80 Mol-% Einheiten ausgewählt aus den allgemeinen Formeln X, XI, XII und XIII

R⁸₃SiO_{1/2} (X),

R⁸₂SiO_{2/2} (XI),

R⁸SiO_{3/2} (XII),

SiO_{4/2} (XIII),

wobei
- **R⁸**: unsubstituierte oder mit Halogenen substituierte einwertige Kohlenwasserstoffreste mit 1-40 Kohlenstoffatomen, Reste-**OR⁷** oder -OH bedeuten,
mindestens 80 Mol-% der Einheiten aus den allgemeinen Formeln XII und XIII ausgewählt werden und 0,5 bis 10 Mol-%, insbesondere 2 bis 5 Mol-% der Reste R⁸ Reste -OR⁷ bedeuten, wobei R⁷ die vorstehenden Bedeutungen aufweist.

Die einwertigen Kohlenwasserstoffreste R⁸ weisen bevorzugt die bevorzugten Bedeutungen der Kohlenwasserstoffreste R⁷ auf. Insbesondere bevorzugt sind Methyl, Ethyl, Propyl, Butyl, Cyclohexyl, Phenyl und deren Kombinationen.

Die an Silicium gebundene Alkoxygruppen aufweisenden Siliconharze sind vorzugsweise MQ-Harze und sind vorzugsweise aufgebaut aus mindestens 80 Mol-%, insbesondere 95 Mol-% Einheiten ausgewählt aus den allgemeinen Formeln XII und XIII. Das Molverhältnis der Einheiten der allgemeinen Formeln XII zu XIII beträgt vorzugsweise mindestens 0,25, insbesondere mindestens 0,5.

Die an Silicium gebundene Alkoxygruppen aufweisenden Siliconharze sind auch vorzugsweise DT-Harze und sind vorzugsweise aufgebaut aus mindestens 80 Mol-%, insbesondere 95 Mol-% Einheiten ausgewählt aus den allgemeinen Formeln X und XI. Das Molverhältnis der Einheiten der allgemeinen Formeln X zu XI beträgt vorzugsweise mindestens 0,25, insbesondere mindestens 0,5.

Das durchschnittliche Molgewicht Mn der an Silicium gebundene Alkoxygruppen aufweisenden Siliconharze beträgt vorzugsweise mindestens 200 g/mol besonders bevorzugt vorzugsweise 1000 g/mol und vorzugsweise höchstens 100 000 g/mol, insbesondere höchstens 20 000 g/mol.

Die Zusammensetzungen (Z) enthalten bevorzugt 5 bis 70 Gew.-Teile, insbesondere 10 bis 50 Gew.-Teile an Silicium gebundene Alkoxygruppen aufweisende Siliciumverbindung (S).

Das Metall des Metall-C₁-C₄-carboxylats ist vorzugsweise Zr(IV) oder Zn(II). Das Metall-C₁-C₄-carboxylat wird vorzugsweise ausgewählt aus Zirkoniumacetat, Zirkoniumformiat, Zinkacetat und Zinkformiat.

Die Zusammensetzungen (Z) enthalten bevorzugt 1 bis 10 Gew.-Teile Metall-C₁-C₄-carboxylat.

Die Zusammensetzungen (Z) enthalten vorzugsweise höchstens 0,1 Gew.-Teile, insbesondere höchstens 0,01 Gew.-Teile Kieselsäure.

Die Zusammensetzungen (Z) können als Mischungen, Lösungen oder Emulsionen vorliegen. Die Mischungen, Lösungen oder Emulsionen können leicht hergestellt werden, durch Zusammengegeben und Vermischen der einzelnen Komponenten in beliebiger Reihenfolge.

Als Lösungen enthalten die Zusammensetzungen (Z) bevorzugt Lösungsmittel oder Lösungsmittelgemische mit einem Siedepunkt bzw. Siedebereich von bis zu 120° C bei 0,1 MPa. Beispiele für solche Lösungsmittel sind Wasser; Alkohole, wie Methanol, Ethanol, n-Propanol, iso-Propanol, n-Amylalkohol, i-Amylalkohol; Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, insbesondere aliphatische und aromatische Kohlenwasserstoffe wie Pentan, n-Hexan, Hexan-Isomerengemische, Heptan, Oktan, Waschbenzin, Petrolether, Benzol, Toluol, Xylole; Ketone, wie Aceton, Methylethylketon, Diisopropylketon, Methyl-isobutylketon (MIBK); Ester, wie Ethylacetat, Butylacetat, Propylpropionat, Ethylbutyrat, Ethylisobutyrat; oder Gemische dieser Lösungsmittel. Besonders bevorzugte Lösungsmittel sind die Kohlenwasserstoffe.

Als Lösungen enthalten die Zusammensetzungen (Z) bevorzugt 10 bis 10000 Gew.-Teile, insbesondere 100 bis 5000 Gew.-Teile Lösungsmittel.

Als Emulsionen enthalten die Zusammensetzungen (Z) bevorzugt Emulgatoren und Coemulgatoren. Als Emulgatoren können alle bisher bekannten, ionischen und nicht-ionischen Emulgatoren sowohl einzeln, als auch in Mischungen verschiedener Emulgatoren eingesetzt werden, mit denen auch bisher beständige wässrige Emulsionen von Organopolysiloxanen hergestellt werden konnten. Besonders bevorzugt sind Fettalkoholpolyglykolether, Alkylpolyglucoside, Alkylphenolpolyglykolether und quaternäre Ammoniumsalze von gesättigten und ungesättigten Fettsäuren für Öl in Wasser Emulsionen. Als Coemulgatoren können alle bisher bekannten Glykole, Polyglykole, sowie Alkylpolyglycole eingesetzt werden.
Für Wasser in Öl Emulsionen können alle bisher bekannten Emulgatoren sowohl einzeln, als auch in Mischungen verschiedener Emulgatoren verwendet werden. Besonders bevorzugt sind Sorbitanoleate oder -stearate, Glycerinoleate oder - stearate, Fettsäureglycerinester oder Siloxanpolyglucoside (wie beschrieben in EP 0 612 759) in Kombination mit Coemulgatoren wie z.B. Fettalkoholpolyglykolethern, Alkylpolyglucosiden und Nonylphenolpolyglykolethern.

Als Emulsionen enthalten die Zusammensetzungen (Z) bevorzugt 0,1 bis 50 Gew.-Teile, insbesondere 1 bis 20 Gew.-Teile Emulgator.

Als Emulsionen enthalten die Zusammensetzungen (Z) bevorzugt 100 bis 20000 Gew.-Teile, insbesondere 300 bis 2000 Gew.-Teile Wasser. Das Wasser ist vollentsalztes oder salzhaltiges Wasser, bevorzugt vollentsalztes Wasser.

Die Zusammensetzungen (Z) sind vorzugsweise wässrige Emulsionen oder wässrige Lösungen.

Die Emulsionen enthalten bevorzugt ein Protonierungsmittel. Das Protonierungsmittel ist vorzugsweise eine einprotonige oder mehrprotonige, wasserlösliche oder wasserunlösliche, organische oder anorganische Säure, besonders bevorzugt Ameisensäure, Essigsäure, Schwefelsäure, Salzsäure oder Zitronensäure. Protonierungsmittel wird vorzugsweise in einer Menge von 0,05 bis 2 Mol Proton pro Mol basisches Stickstoffatom der Reste R² zugesetzt.

Die Zusammensetzungen (Z) können neben Polydimethylsiloxan (P) und Siliciumverbindung (S) noch weitere Silicone enthalten, z.B. flüssige Silicone, cyclische Silicone und/oder feste Silicone, wie siliciumhaltige Wachse. Bevorzugt sind lineare Polydimethylsiloxane, vorzugsweise mit einer Kettenlänge von 10 bis 500 Dimethylsiloxaneinheiten und deren Mischungen, denn diese verbessern die Spreitwirkung auf dem Substrat.

Die Zusammensetzungen (Z) enthalten vorzugsweise 0 bis 90 Gew.-Teile, besonders bevorzugt 10,0 bis 60,0 Gew.-Teile, insbesondere 20 bis 50 Gew.-Teile weitere Silicone.

Die Zusammensetzungen (Z) können nicht siliciumhaltige Wachse enthalten, wie natürliche Wachse pflanzlichen Ursprungs, wie Carnaubawachs und Candellilawachs, Montansäure- und Montanesterwachse, Paraffinwachse, insbesondere anoxidierte synthetische Paraffine, Polyethylenwachse, Polyvinyletherwachse und metallseifenhaltige Wachse, wobei Carnaubawachs, Paraffinwachse und Polyethylenwachse bevorzugt und Paraffinwachse besonders bevorzugt sind.

Die Zusammensetzungen (Z) enthalten vorzugsweise 0 bis 100 Gew.-Teile, insbesondere 5 bis 50 Gew.-Teile nicht siliciumhaltige Wachse.

Die Zusammensetzungen (Z) können Verdickungsmittel enthalten. Bespiele für Verdickungsmittel sind Homopolysaccaride, Polyacrylate, Carboxy- und Hydroxymethylcellulose, wobei Polysaccaride und Polyacrylate besonders bevorzugt sind.

Die Zusammensetzungen (Z) enthalten vorzugsweise 0 bis 60 Gew.-Teile, insbesondere 5 bis 20 Gew.-Teile Verdickungsmittel.

Die Zusammensetzungen (Z) können noch weitere Bestandteile, wie Konservierungsmittel, Duftstoffe, Säuren, Laugen, Rostschutzmittel und Farbstoffe enthalten.
Beispiele für Konservierungsmittel sind Formaldehyd, Parabene, Benzylalkohol, Propionsäure und deren Salze sowie Isothiazolinone.

Ein weiterer Gegenstand der Erfindung ist die Verwendung der Zusammensetzungen (Z) zur Behandlung von porösen oder nicht porösen, saugfähigen oder nicht saugfähigen Substraten, bevorzugt von Zellulosen, Papier, natürlichen und/oder synthetischen Textilfasern, insbesondere Cellulose basierenden Fasern, wie Baumwolle, Viskose, Cupro, Baumwolleregeneratfasern, animalische Fasern, wie Wolle, Seide, synthetische Fasern, wie Polyester, Polyamid, Polyacrylnitril, Polypropylen und Polyethylen, sowie Fasergemischen, sowie aus den Fasern hergestellten gewobenen und gestrickten textilen Flächengebilden, Vliesen und Teppichen, mineralischen Baumaterialien, Stein, Fliesen, Marmor, Metallen, lackierten Metallen, Glas, Keramiken, Glaskeramik, Kunststoffen, lackierten Kunststoffen, Holz, Laminat, Kork, Gummi, Lederimitat, Leder und kosmetische Anwendungen, wie z. B. Haut und Haar. Besonders bevorzugt ist die Verwendung der Zusammensetzungen (Z) zur Imprägnierung von Textilien und Leder.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Zusammensetzungen (Z) ergeben 100 Gew.-%.

Die Aminzahl in mequiv/g entspricht der Menge an Stickstoff in mmol in lg Substanz.
Bestimmt wird die Aminzahl als Anzahl der ml 1N HCl, die zur Neutralisation von 1 g Substanz erforderlich ist.

In den folgenden Beispielen sind, falls jeweils nicht anders angegeben, alle Mengen- und Prozentangaben auf das Gewicht bezogen, alle Drücke 0,10 MPa (abs.) und alle Temperaturen 25°C. Alle Viskositäten beziehen sich auf 25°C.

### Beispiele:

### BEISPIEL 1 (Referenz, nicht erfindungsgemäß):

5,3 g Tridecylalkoholethoxylat (erhältlich als LUTENSOL^{®} TO von BASF SE) werden mit 1,7 g Wasser vermischt. 29,0 g Hydrogenpolysiloxan (erhältlich bei der Wacker Chemie AG) wird tropfenweise zugegeben. Anschliessend erfolgt die Emulgierung und Verdünnung mit 0,2 g Essigsäure (erhältlich von Sigma-Aldrich Chemie GmbH) und 64,0 g Wasser. Die Formulierung wird mit Zirkoniumacetat gemischt.

### BEISPIEL 2a:

2.5 g Siliconharz [[Me₃SiO_{1/2}]_{0,373} [SiO₂]_{0,627}]₄₀, (Mₙ = 2700 g/mol, das Harz besteht aus 0,2% OH und 3,1% OEt) werden in 2,0 g Ethylenglycolmonohexylether gelöst (erhältlich von Sigma-Aldrich Chemie GmbH) und 1,1 g Tridecylalkoholethoxylat (siehe BEISPIEL 1) unter Rühren zugemischt. Anschließend wird 14,5 g Aminosiliconöl (Viskosität 1000 mm²/s bei 25 °C, funktionelle Reste - (CH₂)₃NH (CH₂)₂NH₂; Aminzahl 0, 4 mequiv/g, 47 mol% SiMe₃-Endgruppen, 47 mol% SiMe₂OH-Endgruppen und 6 mol% SiMe₂OMe-Endgruppen) bei 25°C zugemischt. Die Mischung wird mit 79,9 g Wasser emulgiert, um eine klare, farblose Lösung zu erhalten. Die Formulierung wird mit Zirkoniumacetat gemischt.

### BEISPIEL 2b:

Analog BEISPIEL 2a, aber anstatt Zirkoniumacetatlösung wird eine Zinkacetatlösung verwendet, bestehend aus 2.0 g Zinkacetat-Dihydrat (erhältlich von Sigma-Aldrich Chemie GmbH) gelöst in 7.0 g Wasser und 1.0 g Essigsäure.

### BEISPIEL 3:

3,0 g Tetraethylsilikat (ergibt 41% Siliciumdioxid bei vollständiger Hydrolyse) und 14,0 g Aminosiliconöl (Viskosität ca. 950 mm²/s bei 25°C, funktionelle Reste - (CH₂)₃NH(CH₂)₂NH₂; Aminzahl 0,5 mequiv/g, 47 mol% SiMe₃-Endgruppen, 47 mol% SiMe₂OH-Endgruppen, 6 mol% SiMe₂OMe-Endgruppen) werden in 3,0 g Ethylenglycolmonohexylether gelöst und mit 1,1 g Tridecylalkoholethoxylat und 5,0 g Butylcarbitol (erhältlich bei Sigma-Aldrich Chemie AG) und 7,0 g Wasser vermischt und anschließend mit 73,9 g Wasser und 0,2 g Essigsäure emulgiert, um eine milchige Lösung bei 25 °C zu erhalten. Die Formulierung wird mit Zirkoniumacetat gemischt.

### BEISPIEL 4:

2.5 g Siliconharz [[Me₃SiO_{1/2}]_{0,373} [SiO₂]_{0,627}]₄₀, (Mₙ = 2700 g/mol, das Harz besteht aus 0,2% OH und 3,1% OEt) und 3,8 g Polydimethylsiloxan (Viskosität 350 mm²/s bei 25°C) werden mit 1,1 g Ethylenglycolmonohexylether und 14,5 g Aminosilikonöl (Viskosität 1000 mm²/s bei 25 °C, funktionelle Reste; -(CH₂)₃NH₂; Aminzahl 0,4 mequiv/g, 47 mol% SiMe₃-Endgruppen, 47 mol% SiMe₂OH-Endgruppen, 6 mol% SiMe₂OMe-Endgruppen) gemischt Diese Mischung wird mit 1,3 g Tridecylalkoholethoxylat und 4 g Butylcarbitol vermengt und mit 0,2 g Essigsäure und 72,8 g Wasser bei 25 °C zu einer milchigen Lösung emulgiert. Die Formulierung wird mit Zirkoniumacetat gemischt.

### BEISPIEL 5:

2,5 g Methylphenylsiliconharz (M_{w} = 1030 g/mol, Mₙ = 730; Polydispersität 1,4, Viskosität 140 mm²/s bei 25°C und 18,3 Gewichts% SiOMe- und 0,24 Gewichts% Si-OH-Gruppen auf der Oberfläche, bestehend aus 55 mol% PhSiO_{3/2}-Einheiten, 40 Mol% Me₂SiO_{2/2}-Einheiten und 5 Mol% Me-Si(O)_{3/2}-Einheiten) wird mit 1,1 g Ethylenglycolmonohexylether und 14,5 g Aminosilikonöl (Viskosität 1100 mm²/s bei 25 °C, funktionelle Reste - (CH₂)₃NH(CH₂)₂NH₂; Aminzahl 0,3 mequiv/g, 47 mol% SiMe₃-Endgruppen, 47 mol% SiMe₂OH-Endgruppen, 6 mol% SiMe₂OMe-Endgruppen) und 1,3 g Tridecylalkoholethoxylat (siehe BEISPIEL 1) und 4 g Butylcarbitol vermischt und mit 0,2 g Essigsäure und 76,6 g Wasser emulgiert, um eine milchige Lösung bei 25 °C zu erhalten.
Die Formulierung wird mit Zirkoniumacetat gemischt.

### BEISPIEL 6:

2,5 g eines Methylsiliconharzes (bestehend aus 98% Me-Si(O)_{3/2}-Einheiten und 2% Me₂Si(O)_{2/2}-Einheiten mit zusätzlichen 5,8 Gewichts% Ethoxygruppen und 0,9 Gewichts% OH-Gruppen auf der Oberfläche) wird mit 1,1 g Ethylenglycolmonohexylether und 14,5 g Aminosilikonöl (Viskosität 1000 mm²/s bei 25 °C, funktionelle Reste -(CH₂)₃NH(CH₂)₂NH₂; Aminzahl 0,5 mequiv/g, 47 mol% SiMe₃-Endgruppen, 47 mol% SiMe₂OH-Endgruppen, 6 mol% SiMe₂OMe-Endgruppen) und 1,3 g Tridecylalkoholethoxylat und 4 g Butylcarbitol (in BEISPIEL 1 beschrieben) vermischt und mit 0,2 g Essigsäure und 76,6 g Wasser emulgiert, um eine milchige Lösung bei 25 °C zu bilden.
Die Formulierung wird mit Zirkoniumacetat gemischt.

### BEISPIEL 7:

Ein 5x5x0.2 cm Stück Wet-Blue Rinder-Crust wird mit der 1%igen Lösung des beschriebenen BEISPIEL 3 für 2 Stunden bei Raumtemperatur eingeweicht. Die Probe wird für 24 Stunden bei 50 °C getrocknet und in einer Penetrometer-Maschine getestet (erhältlich von PFI Pirmasens, Deutschland, erhältlich).
Das Ledermuster wird getestet, bis das Wasser durch den Lederquerschnitt durchdringt. Siehe Tabelle 2.

### BEISPIEL 8:

Ein 5x5x0.2 cm Stück Wet-Blue Rinder-Crust wird mit der 1%igen Lösung des beschriebenen BEISPIEL 4 für 2 Stunden bei Raumtemperatur eingeweicht. Die Probe wird für 24 Stunden bei 50 °C getrocknet und in einer Penetrometer-Maschine getestet (siehe BEISPIEL 7).
Das Ledermuster wird getestet, bis das Wasser durch den Lederquerschnitt durchdringt. Siehe Tabelle 2.

Die Formulierungen werden entsprechend der in den Tabellen angegebenen Mischungsverhältnisse mit Zirkoniumacetatlösung (als 15%ige Lösung in Essigsäure, erhältlich von Sigma-Aldrich Chemie GmbH) oder Zinkacetatlösung (Beispiel 2b)auf das jeweilige Substrat mit einem Foulard (erhältlich von Mathis AG, Schweiz) aufgetragen.

**Tabelle 1:**

| BEISPIEL no. | Einsatzmenge [g/l] | Zirkoniumacetat oder Zinkacetat (1) [g/l] | Spray Test |
|---|---|---|---|
| 1* | 40 | 6.0 | 90 (Baumwolle) |
| 2a | 50 | 5,2 | 90 (Baumwolle) |
| 2b | 50 | 7,2(1) | 90 (Baumwolle) |
| 3 | 50 | 5,7 | 100 (Baumwoll-Polyester-Mischung) |
| 4 | 50 | 5,8 | 100 (Polyamid) |
| 5 | 50 | 6,2 | 100 (Wolle) |
| 6 | 50 | 6,4 | 90 (Viscose) |
| Unbehandelt* | | | 0 (Baumwolle) |

| | | | |
|---|---|---|---|
| *nicht erfindungsgemäß Auflagemenge (Liquor pick-up) etwa 30-50% Trocknung und Kondensation: 3 min. bei 150°C | | | |

### Spray Test: gemäß Textile Standard AATCC 22

**Tabelle 2:**

| BEISPIEL no. | Produkt | Zeit [min] |
|---|---|---|
| 7 | BEISPIEL 3 | 40 |
| 8 | BEISPIEL 4 | 45 |
| unbehandelt | | 15 |

| | | |
|---|---|---|
| 5x5x0.2 cm Wet-Blue Rinder-Crust | | |

**Tabelle 3:**

| | Schmutzabweisung | Schmutzentfernbarkeit | | | |
|---|---|---|---|---|---|
| BEISPIEL no. | | Keimöl | Ketchup | Schokoladensirup | Traubensaft |
| 1* | 1 | 2,5 | 3 | 2 | 3,5 |
| 2a | 5 | 4 | 4,5 | 2,5 | 5 |
| 3 | 5 | 3,5 | 4 | 3 | 5 |
| 4 | 3 | 3,5 | 4,5 | 2,5 | 5 |
| 5 | 2 | 3,5 | 4,5 | 2,5 | 5 |
| 6 | 3 | 3,5 | 4,5 | 2,5 | 5 |
| unbehandelt* | 1 | 3 | 3 | 2 | 5 |

| | | | | | |
|---|---|---|---|---|---|
| *nicht erfindungsgemäß | | | | | |

### Test zur Schmutzabweisung (Stain repellent):

0.5ml Testschmutz (Traubensaft) wird auf ein Baumwoll-Stoffgewebe aufgetragen und
mit einem Stück Backpapier abgedeckt. Anschließend wird ein Gewicht von 200 g für 60 sec. aufgelegt. Abschließend wird das Gewicht entfernt und der Schmutz mit einem Papiertuch abgewischt.

### Auswertung: 1 = Absorption; 5 = vollständige Schmutzabweisung (keine Absorption)

### Test zur Schmutzentfernbarkeit (Soil release):

Die beschmutzten Muster werden für eine Stunde an der Luft getrocknet und anschließend gewaschen.

### Waschbedingungen:

Waschmaschine MIELE NOVOTRONIC: Programm "Synthetik" mit hohem Wasserniveau: 59 min; 40°C, 600 U/min. 1,8 kg Ladung der angeschmutzten Proben und Ballast wird mit 30,0 g PERSIL^{®} Color Gel (erhältlich von UNILEVER) gewaschen und anschließend getrocknet.

### Auswertung: gemäß AATCC 9 "Step Chromatic Transference Scale" (1 = starke Übertragung; 5 = keine Übertragung)

| | |
|---|---|
| Keimöl: | MAZOLA Keimöl, UNILEVER Hamburg, Deutschland |
| Ketchup: | HEINZ Tomato Ketchup, Düsseldorf, Deutschland |
| Schokoladensirup: | HERSHEY'S Chocolate Syrup, Pennsylvania, USA |
| Traubensaft: | POELZ Traubensaft, Garching, Deutschland |

## Patentansprüche

1. Zusammensetzungen (Z), die enthalten:
(i) 100 Gew.-Teile eines Aminoalkylgruppen aufweisenden Polydimethylsiloxans (P) mit einer Aminzahl von mindestens 0,05 mequiv/g Polydimethylsiloxan (P), aufgebaut aus Einheiten der allgemeinen Formel I
R¹ₐR²_{b}SiO_{(4-a-b/2)} (I),
in der
**R¹** unsubstituierte oder mit Halogenen substituierte Alkylreste mit 1-40 Kohlenstoffatomen, Reste -OR oder -OH,
**R** unsubstituierte oder mit Halogenen substituierte Alkylreste mit 1-40 Kohlenstoffatomen,
**R²** Aminoalkylreste der allgemeinen Formel II
-R³-NR⁴R⁵ (II),
**R³** zweiwertige Kohlenwasserstoffreste mit 1-40 Kohlenstoffatomen,
**R⁴, R^{4'}** einwertige Kohlenwasserstoffreste mit 1-40 Kohlenstoffatomen oder H,
**R⁵** H oder einen Rest der allgemeinen Formel III
-(R⁶-NR⁴)ₓR⁴ (III),
**R⁶** einen zweiwertigen Rest der allgemeinen Formel IV
-(CR⁴'R^{4'}-)_{y} (IV),
**x** den Wert 0 oder einen Wert von 1 bis 40,
**y** den Wert 1 oder 2,
**a** den Wert 0, 1, 2 oder 3,
**b** den Wert 0, 1, 2 oder 3 und
**a+b** einen durchschnittlichen Wert von 1,5 bis 2,5 bedeuten,
wobei höchstens 20 mol% der Reste R¹ OH oder OR sind,
(ii) 1 bis 80 Gew.-Teile einer an Silicium gebundene Alkoxygruppen aufweisenden Siliciumverbindung (S) und
(iii) 0,5 bis 15 Gew.-Teile Metall-C₁-C₄-carboxylat, wobei das Metall ausgewählt wird aus Zr(IV), Ti(IV) und Zn(II).

2. Zusammensetzungen (Z) nach Anspruch 1, bei denen die Reste R⁴ Alkylreste mit 1 bis 6 Kohlenstoffatomen bedeuten.

3. Zusammensetzungen (Z) nach einem oder mehreren der vorangehenden Ansprüche 1 oder 2, bei denen die Reste R² ausgewählt werden aus -CH₂N(R⁴)₂, -(CH₂)₃N(R⁴)₂, und - (CH₂)₃N(R⁴)(CH₂)₂N(R⁴)₂.

4. Zusammensetzungen (Z) nach einem oder mehreren der vorangehenden Ansprüche, bei denen die an Silicium gebundene Alkoxygruppen aufweisende Siliciumverbindung (S) ausgewählt wird aus Alkoxysilanen, monomeren, oligomeren und polymeren Silicatverbindungen sowie an Silicium gebundene Alkoxygruppen aufweisenden Siliconharzen.

5. Zusammensetzungen (Z) nach Anspruch 4, bei denen die Silicatverbindungen ausgewählt werden aus dem Tetraalkoxysilicat der allgemeinen Formel V
R⁷O₄Si (V),
und einer Polysilicatverbindung die mindestens 80 Mol-% Einheiten der allgemeinen Formeln VI und VII und mindestens 2 Einheiten der allgemeinen Formel VI
R⁷O₃SiO_{1/2} (VI),
R⁷O₂SiO_{2/2} (VII),
aufweist und deren Gemischen, wobei
**R⁷** unsubstituierte oder mit Halogenen substituierte Kohlenwasserstoffreste mit 1-18 Kohlenstoffatomen bedeuten.

6. Zusammensetzungen (Z) nach Anspruch 4, bei denen die an Silicium gebundene Alkoxygruppen aufweisenden Siliconharze aufgebaut sind aus mindestens 80 Mol-% Einheiten ausgewählt aus den allgemeinen Formeln X, XI, XII und XIII
R⁸₃SiO_{1/2} (X),
R⁸₂SiO_{2/2} (XI),
R⁸SiO_{3/2} (XII),
SiO_{4/2} (XIII),
wobei
**R⁸** unsubstituierte oder mit Halogenen substituierte einwertige Kohlenwasserstoffreste mit 1-40 Kohlenstoffatomen, Reste-**OR⁷** oder -OH bedeuten,
mindestens 80 Mol-% der Einheiten aus den allgemeinen Formeln XII und XIII ausgewählt werden und 0,5 bis 10 Mol-% der Reste **R⁸** Reste **-OR⁷** bedeuten, wobei
**R⁷** unsubstituierte oder mit Halogenen substituierte Kohlenwasserstoffreste mit 1-18 Kohlenstoffatomen bedeuten.

7. Zusammensetzungen (Z) nach einem oder mehreren der vorangehenden Ansprüche, bei denen das Metall-C₁-C₄-carboxylat ausgewählt wird aus Zirkoniumacetat, Zirkoniumformiat, Zinkacetat und Zinkformiat.

8. Zusammensetzungen (Z) nach einem oder mehreren der vorangehenden Ansprüche, welche als wässrige Emulsionen oder wässrige Lösung vorliegen.

9. Verwendung der Zusammensetzungen (Z) nach einem oder mehreren der vorangehenden Ansprüche zur Behandlung von porösen oder nicht porösen, saugfähigen oder nicht saugfähigen Substraten

10. Verwendung nach Anspruch 9 zur Imprägnierung von Textilien und Leder.

## Claims

1. Compositions (Z) comprising:
(i) 100 parts by weight of an aminoalkyl-containing polydimethylsiloxane (P) having an amine number of not less than 0.05 mequiv/g of polydimethylsiloxane (P), constructed of units of general formula I
R¹ₐR²_{b}SiO_{(4-a-b/2)} (I),
where
R¹ represents unsubstituted or halogen-substituted alkyl moieties of 1-40 carbon atoms, -OR or -OH,
R represents unsubstituted or halogen-substituted alkyl moieties of 1-40 carbon atoms,
R² represents aminoalkyl moieties of general formula II
-R³-NR⁴R⁵ (II),
R³ represents divalent hydrocarbon moieties of 1-40 carbon atoms,
R⁴ and R^{4'} each represents monovalent hydrocarbon moieties of 1-40 carbon atoms or H,
R⁵ represents H or a moiety of general formula III
-(R⁶-NR⁴)ₓR⁴ (II),
R⁶ represents a divalent moiety of general formula IV
-(CR^{4'}R^{4'}-)_{y} (IV),
x represents the value 0 or a value from 1 to 40,
y represents the value 1 or 2,
a represents the value 0, 1, 2 or 3,
b represents the value 0, 1, 2 or 3, and
a+b represents an average value from 1.5 to 2.5,
with the proviso that not more than 20 mol% of the R¹ moieties are OH or OR,
(ii) 1 to 80 parts by weight of a silicon compound (S) comprising alkoxy groups bonded to silicon, and
(iii) 0.5 to 15 parts by weight of metal C₁-C₄-carboxylate, wherein the metal is selected from Zr(IV), Ti(IV) and Zn(II).

2. Compositions (Z) according to Claim 1, wherein the R⁴ moieties represent alkyl moieties having 1 to 6 carbon atoms.

3. Compositions (Z) according to either or both of the preceding Claims 1 and 2 wherein the R² moieties are selected from -CH₂N(R⁴)₂, -(CH₂)₃N(R⁴)₂, and -(CH₂)₃N(R⁴)(CH₂)₂N(R⁴)₂.

4. Compositions (Z) according to one or more of the preceding claims wherein the silicon compound (S) comprising alkoxy groups bonded to silicon is selected from alkoxysilanes, monomeric, oligomeric and polymeric silicate compounds and silicone resins comprising alkoxy groups bonded to silicon.

5. Compositions (Z) according to Claim 4 wherein the silicate compounds are selected from the tetraalkoxysilicate of general formula V
R⁷O₄Si (V),
and a polysilicate compound comprising not less than 80 mol% of units of general formulae VI and VII and 2 or more units of general formula VI
R⁷O₃SiO_{1/2} (VI),
R⁷O₂SiO_{2/2} (VII),
and mixtures thereof, where
R⁷ represents unsubstituted or halogen-substituted hydrocarbon moieties of 1-18 carbon atoms.

6. Compositions (Z) according to Claim 4 wherein the silicone resins comprising alkoxy groups bonded to silicon are constructed of not less than 80 mol% of units selected from general formulae X, XI, XII and XIII
R⁸₃SiO_{1/2} (X),
R⁸₂SiO_{2/2} (XI),
R⁸SiO_{3/2} (XII),
SiO_{4/2} (XIII),
where
R⁸ represents unsubstituted or halogen-substituted monohydric hydrocarbon moieties of 1-40 carbon atoms, -OR⁷ or -OH,
not less than 80 mol% of the units are selected from general formulae XII and XIII and from 0.5 to 10 mol% of the R⁸ moieties are -OR⁷ moieties, where
R⁷ represents unsubstituted or halogen-substituted hydrocarbon moities of 1-18 carbon atoms.

7. Compositions (Z) according to one or more of the preceding claims wherein the metal C₁-C₄-carboxylate is selected from zirconium acetate, zirconium formate, zinc acetate and zinc formate.

8. Compositions (Z) according to one or more of the preceding claims in the form of an aqueous emulsion or in the form of an aqueous solution.

9. Use of the compositions (Z) according to one or more of the preceding claims in the treatment of porous or aporous, absorbent or nonabsorbent substrates.

10. Method according to Claim 9 in the impregnation of textiles and leather.

## Revendications

1. Compositions (Z), qui contiennent :
(i) 100 parties en poids d'un polydiméthylsiloxane (P) comprenant des groupes aminoalkyle, ayant un indice d'amine d'au moins 0,05 méquiv./g de polydiméthylsiloxane (P), formé par des unités de formule générale I
R¹ₐR²_{b}SiO_{(4-a-b/2)} (I)
dans laquelle
R¹ signifie des radicaux alkyle de 1 à 40 atomes de carbone, non substitués ou substitués avec des halogènes, des radicaux -OR ou -OH,
R signifie des radicaux alkyle de 1 à 40 atomes de carbone non substitués ou substitués avec des halogènes,
R² signifie des radicaux aminoalkyle de formule générale II
-R³-NR⁴R⁵ (II)
R³ signifie des radicaux hydrocarbonés bivalents de 1 à 40 atomes de carbone,
R⁴, R^{4'} signifient des radicaux hydrocarbonés monovalents de 1 à 40 atomes de carbone ou H,
R⁵ signifie H ou un radical de formule générale III
- (R⁶-NR⁴)ₓR⁴ (III)
R⁶ signifie un radical bivalent de formule générale IV
-(CR^{4'}R^{4'}-)_{y} (IV)
x signifie la valeur 0 ou une valeur de 1 à 40,
y signifie la valeur 1 ou 2,
a signifie la valeur 0, 1, 2 ou 3,
b signifie la valeur 0, 1, 2 ou 3, et
a+b signifie une valeur moyenne de 1,5 à 2,5,
au plus 20 % en moles des radicaux R¹ signifiant OH ou OR,
(ii) 1 à 80 parties en poids d'un composé de silicium (S) comprenant des groupes alcoxy reliés au silicium et
(iii) 0,5 à 15 parties en poids d'un carboxylate en C₁-C₄ de métal, le métal étant choisi parmi Zr(IV), Ti(IV) et Zn(II).

2. Compositions (Z) selon la revendication 1, dans lesquelles les radicaux R⁴ signifient des radicaux alkyle de 1 à 6 atomes de carbone.

3. Compositions (Z) selon une ou plusieurs des revendications 1 ou 2 précédentes, dans lesquelles les radicaux R² sont choisis parmi -CH₂N(R⁴)₂, -(CH₂)₃N(R⁴)₂ et -(CH₂)₃N(R⁴) (CH₂)₂N(R⁴)₂.

4. Compositions (Z) selon une ou plusieurs des revendications précédentes, dans lesquelles le composé de silicium (S) comprenant des groupes alcoxy reliés au silicium est choisi parmi les alcoxysilanes, les composés de silicate monomères, oligomères et polymères, ainsi que les résines de silicone comprenant des groupes alcoxy reliés au silicium.

5. Compositions (Z) selon la revendication 4, dans lesquelles les composés de silicate sont choisis parmi le tétraalcoxysilicate de formule générale V
R⁷O₄Si (V)
et un composé de polysilicate qui comprend au moins 80 % en moles d'unités de formules générales VI et VII et au moins 2 unités de formule générale VI
R⁷O₃SiO_{1/2} (VI)
R⁷O₂SiO_{2/2} (VII)
et leurs mélanges,
R⁷ signifiant des radicaux hydrocarbonés de 1 à 18 atomes de carbone non substitués ou substitués avec des halogènes.

6. Compositions (Z) selon la revendication 4, dans lesquelles les résines de silicone comprenant des groupes alcoxy reliés au silicium sont formées par au moins 80% en moles d'unités choisies parmi les formules générales X, XI, XII et XIII
R⁸₃SiO_{1/2} (X)
R⁸₂SiO_{2/2} (XI)
R⁸SiO_{3/2} (XII)
SiO_{4/2} (XIII)
R⁸ signifiant des radicaux hydrocarbonés monovalents de 1 à 40 atomes de carbone non substitués ou substitués avec des halogènes, des radicaux -OR⁷ ou -OH, au moins 80 % en moles des unités étant choisies parmi les formules générales XII et XIII, et 0,5 à 10 % en moles des radicaux R⁸ signifiant des radicaux -OR⁷,
R⁷ signifiant des radicaux hydrocarbonés de 1 à 18 atomes de carbone non substitués ou substitués avec des halogènes.

7. Compositions (Z) selon une ou plusieurs des revendications précédentes, dans lesquelles le carboxylate en C₁-C₄ de métal est choisi parmi l'acétate de zirconium, le formiate de zirconium, l'acétate de zinc et le formiate de zinc.

8. Compositions (Z) selon une ou plusieurs des revendications précédentes, qui se présentent sous la forme d'émulsions aqueuses ou de solutions aqueuses.

9. Utilisation des compositions (Z) selon une ou plusieurs des revendications précédentes pour le traitement de substrats poreux ou non poreux, absorbants ou non absorbants.

10. Utilisation selon la revendication 9 pour l'imprégnation de textiles et de cuir.
